Europäisches Patentamt

European Patent Office

Office européen des brevets

(19)

(11) Veröffentlichungsnummer: **0 227 978**
**B1**

(12) **EUROPÄISCHE PATENTSCHRIFT**

(45) Veröffentlichungstag der Patentschrift: **14.03.90**

(21) Anmeldenummer: **86116950.6**

(22) Anmeldetag: **05.12.86**

(51) Int. Cl.⁵: **B 01 D 3/22**, C 01 D 1/28, C 01 D 7/00

(54) **Destillative Abtrennung von Ammoniak aus der Soda-Endlauge.**

(30) Priorität: **20.12.85 DE 3545189**

(43) Veröffentlichungstag der Anmeldung:
**08.07.87 Patentblatt 87/28**

(45) Bekanntmachung des Hinweises auf die
Patenterteilung:
**14.03.90 Patentblatt 90/11**

(84) Benannte Vertragsstaaten:
**BE DE FR GB IT NL**

(56) Entgegenhaltungen:
**DE-A-2 634 785**
**FR-A-2 267 812**
**FR-A-2 346 377**
**US-A-4 372 924**

(73) Patentinhaber: **Chemische Fabrik Kalk GmbH**
**Kalker Hauptstrasse 22 Postfach 91 01 57**
**D-5000 Köln 91 (DE)**

(72) Erfinder: **Dust, Hanspeter, Dr.**
**An der Schmitten 30**
**D-5060 Bergisch-Gladbach 1 (DE)**
Erfinder: **Eisenhauer, Gerhard, Dr.**
**Roonstrasse 81**
**D-4150 Krefeld (DE)**
Erfinder: **Wickenhäuser, Gerhard, Dr.**
**Sander Strasse 89b**
**D-5060 Bergisch-Glasbach 2 (DE)**

(74) Vertreter: **Werner, Hans-Karsten et al**
**Patentanwälte von Kreisler Selting Werner**
**Deichmannhaus am Hauptbahnhof**
**D-5000 Köln 1 (DE)**

**Beschreibung**

Die Erfindung betrifft ein Verfahren zur destillativen Abtrennung von Ammoniak aus alkalisch gestellten Flüssigkeiten, insbesondere mit Kalkmilch versetzten Mutterlaugen des Ammoniak-Soda-Verfahrens in Destillationskolonnen mit Böden.

Bei der Soda-Herstellung nach dem Ammoniak-Verfahren fällt im allgemeinen ein Flüssigkeitsstrom an, der neben Calciumchlorid und anderen Salzen freies Ammoniak enthält. Zur Vermeidung von Ammoniakverlusten muß Ammoniak abdestilliert werden. Der Flüssigkeitsstrom enthält neben wasserlöslichen Salzen meist auch wasserunlösliche Stoffe wie Siliciumdioxyd, Calciumcarbonat und Calciumsulfat in Form von Feststoffpartikeln und zwar in Mengen von zusammen bis zu 3%. Bei der Destillation fallen weitere Feststoffe, insbesondere Calciumsulfate aus, die die bereits vorhandenen Feststoffe verbacken und damit zu erheblichen Verkrustungen und schließlich zur Verstopfung der Destillationskolonne führen. Zur Lösung dieses Problems werden in der Sodaindustrie speziell entwickelte Destillationskolonnen eingesetzt, deren Bauweise die Verkrustung berücksichtigt. Überwiegend werden dazu Bodenkolonnen mit extrem großen Glocken eingesetzt. In geringerem Maße werden auch Kolonnen mit Rühreinrichtungen verwendet.

Diese Kolonnenkonstruktionen sind ein Kompromiß zwischen einer möglichst langen Betriebszeit bis zum Verstopfen und einer vertretbaren Trennleistung der Kolonne. So liegt das in diesen Kolonnen erzielte Verstärkungsverhältnis je Boden auch bei Bodenabständen von 1,5 m und Kolonnendurchmessern von 3,0 m unter 0,7, was für konventionelle Destillationskolonnen einen sehr kleinen Wert darstellt. Üblicherweise werden mit konventionellen Bodentypen und Bodenabständen unter 40 cm bei Kolonnendurchmessern über 2,0 m Verstärkungsverhältnisse je Boden über 1 erreicht.

Weiterhin weisen die in der Sodaindustrie gebräuchlichen Bodenkonstruktionen große Druckverluste je Boden auf. Beispielsweise führt eine Glockenbodenkolonne von 3,0 m Durchmesser und einem Bodenabstand von 1,5 m bei 13 Böden zu einem Druckverlust von 0,35 bar in der Kolonne.

Das geringe Verstärkungsverhältnis der Böden führt zusammen mit dem hohen Druckverlust in der Kolonne zu einem spezifischen Energiebedaft zur Abtrennung des Ammoniaks von 1,4 bis 1,5 t Dampf/t Soda.

Bekannte Kolonnen- oder Bodentypen mit höherer Trennleistung, z.B. Böden mit kleinen Glocken, Ventilböden, Siebböden mit oder ohne Ablaufschacht, wurden bisher in der Sodaindustrie für dieses Destillationsproblem nicht eingesetzt. Die geringeren Abmessungen der Gasdurchtritts-Querschnitte dieser Böden von einigen Millimetern führt bei Produkten, die zur Verkrustung neigen, zu viel zu kurzen Standzeiten der Kolonnen.

In der chemischen Industrie werden zur Destillation organischer Produkte, bei denen Rückstände ausfallen können, mit Erfolg Siebböden ohne Ablaufschächte (Dual-flow-Böden) eingesetzt. Die geringere Verkrustungsneigung dieser Böden beruht darauf, daß in der Kolonne keine trockenen Stellen auftreten, so daß Verkrustungen durch ausfallende Rückstände nicht auftreten oder wieder aufgelöst werden. Bei vorliegendem Destillationsproblem, nämlich der destillativen Abtrennung von Ammoniak aus alkalisch gestellten Flüssigkeiten, insbesondere mit Kalkmilch versetzten Mutterlaugen des Ammoniak-Soda-Verfahrens in Destillationskolonnen mit Böden, sind die Feststoffe jedoch als unlösliche Bestandteile bereits im Zulauf zur Destillationskolonne enthalten. Sie werden außerdem durch den langsamen Ausfall von Gips in der Kolonne zu Krusten gebunden. Ein Lösen dieses Feststoffes in der Flüssigkeit ist dann nicht mehr möglich, d.h., ein Verkrusten der Kolonne ist auch bei diesem Bodentyp nicht zu vermeiden.

Die Erfindung hat sich die Augabe gestellt, die Standzeiten der Kolonne zu verbessern und dabei wirtschaftlich zuverlässig und reproduzierbar zu arbeiten. Diese Aufgabe kann in überraschend guter Weise dadurch gelöst werden, daß Kolonnen mit ebenen Lochböden ohne Ablaufschächten eingesetzt, deren Lochböden einen Abstand von 20 bis 150 cm, einen Öffnungsquerschnitt von 5 bis 25% und Lochdurchmesser zwischen 0,5 und 7 cm aufweisen.

Vorzugsweise beträgt der Öffnungsquerschnitt 10 bis 20% und der Lochdurchmesser 3 bis 5 cm.

Erfindungsgemäß kann die Standzeit der Kolonnen gegenüber den bischer eingesetzten Glockenbödenkolonnen von ca. zwei bis sechs Monaten auf über ein Jahr erhöht werden. Bei den Versuchen hat sich gezeigt, daß sich zwar in der Kolonne Krusten an den Wänden und Böden bilden, die Löcher jedoch frei bleiben. Verstopfungsprobleme der Kolonne durch Abplatzen der Verkrustungen, die bei dem bisher verwendeten Kolonnentyp zum Verstopfen der Ablaufschächte führten, traten bei der Verwendung des gennannten Kolonnentyps nicht auf. Offensichtlich werden abgeplatzte Schalen durch die größe Turbulenz auf den Böden zerschlagen oder sie bilden sich erste gar nicht aus.

Der spezifische Energiebedarf der Kolonne liegt erfindungsgemäß 30% niedriger und damit deutlich unter dem der üblichen Kolonnen. Diese Verringerung ergibt sich einerseits durch Erhöhung der Stoffaustauschfläche in der Kolonne, bei gleicher Kolonnenhöhe und der damit deutlich höheren Zahl an theoretischen Trennstufen, und andererseits durch die Verringerung des Druckverlustes von 0,35 auf 0,1 bar und der damit verbundenen Verringerung der Ablauftemperatur im Kolonnensumpf von etwa 10°C (geringerer Energiebedarf zum Aufheizen der Flüssigkeit).

Die Untersuchungen haben weiterhin gezeigt, daß die Verringerung des Flüssigkeitsstandes (hold up) in der Kolonne und die damit verbundene Verringerung der Verweilzeit der Flüssigkeit in der Kolonne keinen negativen Einflüß auf die Trennleistung der Kolonne haben. Offensichtlich sind die Lösungsgeschwindigkeit des Calciumhydroxids und die anschließende Zersetzungsgeschwindigkeit von Calcium-

# EP 0 227 978 B1

chlorid-Ammoniakaten so hoch, daß dies keinen negativen Einfluß auf die Destillation hat.

Es ist bekannt, daß die erfindungsgemäß verwendeten Kolonnen wesentlich empfindlicher sind gegenüber Schwankungen der durchgesetzten Mengen. Während herkömmliche Glockenböden etc. zwischen 30 und 100% ihrer Kapazität gute Trennleistungen erbringen, müssen die erfindungsgemäß verwendeten Kolonnen mit 70 bis 100% ihrer Kapazität gefahren werden. Dieser Nachteil kann aber heutzutage durch die verbesserte Regeltechnik problemlos ausgeglichen werden.

In den nachfolgenden Beispeilen ist das erfindungsgemäße Verfahren im Vergleich zum Stand der Technik näher erläutert.

Beispiel 1

Eine Versuchskolonne mit einem Durchmesser von 0,5 m mit 20 Böden und einem Bodenabstand von 30 cm wurde eingesetzt, wobei der Öffnungsquerschnitt (Öffnungsverhältnis) 15% betrug. Der Lochdurchmesser betrug 2,5 cm. In dieser Versuchsanlage wurde die mit Kalkmilch alkalisch gestellte Mutterlauge des Ammoniak-Soda-Verfahrens destillativ aufgetrennt. Es wurden keine Verkrustungen der Kolonne beobachtet, und zwar über einen Zeitraum von nahezu 4 Monaten. Im Vergleich dazu ist die Betriebsdauer der Produktionsanlage mit den üblichen Glockenböden auf durchschnittlich 8 bis 9 Wochen begrenzt, da dann die Kolonnenböden verkrustet sind.

Erstaunlicherweise war der Dampfverbrauch pro eingesetzter Menge Lauge erheblich geringer, wobei mindest vergleichbare Trennleistungen erzielt wurden.

Die spezifischen Daten der Versuchsanlage sind in der nachfolgenden Tabelle zusammengestellt und wurden den entsprechenden Daten der Produktionsanlage gegenübergestellt.

| Betriebs-daten | Versuchs-anlage | Versuchs-beginn | Versuchs-ende | Produk-tions-anlage |
|---|---|---|---|---|
| Lauge-menge ($L\ m^3/h$) | | 10 | 9,5 | 120 |
| Dampf-menge (D kg/h) | | 1.000 | 1.050 | 21.700 |
| D/L ($kg/m^3$) | | 100 | 110 | 180 |
| Kopf-druck bar | | 0,16 | 0,16 | 0,15 |
| Sumpf-druck bar | | 0,18 | 0,17 | 0,4 |
| Sumpf-Konzen-tration $NH_3$ mg/l | | 20 | 18 | 25 |

## Patentansprüche

1. Verwendung von Destillationskolonnen mit ebenen Lochböden ohne Ablaufschächten, deren Lochböden einen Abstand von 20 bis 150 cm, einen Öffnungsquerschnitt von 5 bis 25% und Lochdurchmesser zwischen 0,5 und 7 cm aufweisen, zur destillativen Abtrennung von Ammoniak aus alkalisch gestellten Flüssigkeiten, insbesondere mit Kalkmilch versetzten Mutterlaugen des Ammoniak-Soda-Verfahrens in Destillationskolonnen mit Böden.

2. Verwendung gemäß Anspruch 1, dadurch gekennzeichnet, daß der Öffnungsquerschnitt 10 bis 20% beträgt.

3. Verwendung gemäß Anspruch 1 oder 2, dadurch gekennzeichnet, daß der Lochdurchmesser 3 bis 5 cm beträgt.

3

## EP 0 227 978 B1

**Revendications**

1. Utilisation de colonnes de distillation à plateaux perforés plans sans cheminée d'évacuation, dont les plateaux sont écarté de 20 à 150 cm, la section d'ouverture est de 5 à 25% et le diamètre des perforations de 0,5 à 7 cm, pour séparer par distillation l'ammoniac de liquides rendus alcalins, notamment des eaux-mères du procédé de soude à l'ammoniaque traités avec un lait de chaux dans des colonnes de distillation à plateaux.

2. Utilisation selon la revendication 1, caractérisée en ce que la section d'ouverture est de 10 à 20%.

3. Utilisation selon la revendication 1 ou 2, caractérisée en ce que le diamètre des perforations est de 3 à 5 cm.


**Claims**

1. Use of distillation columns having flat perforated trays without discharge ducts, the perforated trays of which have a distance of from 20 to 150 cm, an opening cross section of from 5 to 25% and a hole diameter of between 0.5 and 7 cm, for the distillative separation of ammonia from liquids having been made alkaline, and more specifically mother liquours having been admixed with lime milk of the ammonia-soda process in distillation columns comprising trays.

2. Use according to claim 1, characterized in that the opening cross section is 10 to 20%.

3. Use according to claims 1 or 2, characterized in that the hole diameter is from 3 to 5 cm.